(19) Europäisches Patentamt
European Patent Office
Office européen des brevets

(11) Numéro de publication : **0 125 957**
**B1**

(12) # FASCICULE DE BREVET EUROPÉEN

(45) Date de publication du fascicule du brevet : **04.03.87**

(51) Int. Cl.⁴ : **C 09 K 7/02**

(21) Numéro de dépôt : **84400753.4**

(22) Date de dépôt : **16.04.84**

(54) **Procédé de contrôle du gonflement des argiles en présence d'eau de mer.**

(30) Priorité : **18.04.83 FR 8306309**

(43) Date de publication de la demande :
**21.11.84 Bulletin 84/47**

(45) Mention de la délivrance du brevet :
**04.03.87 Bulletin 87/10**

(84) Etats contractants désignés :
**AT DE GB NL**

(56) Documents cités :
**US-A- 2 280 995**
**US-A- 3 086 937**
**US-A- 3 107 739**
**US-A- 3 372 112**

(73) Titulaire : **COMPAGNIE FRANCAISE DE PRODUITS INDUSTRIELS**
**28, Boulevard Camélinat**
**F-92233 Gennevilliers (FR)**

(72) Inventeur : **Schapira, Joseph**
**32, rue Miollis**
**F-75015 Paris (FR)**
Inventeur : **Vincent, Jacques**
**2, rue des Closeaux**
**F-78750 Mareil Marly (FR)**
Inventeur : **Chaillou, Daniel**
**132, rue des Bourguignons**
**F-92600 Asnieres (FR)**
Inventeur : **Schild, Jacques**
**9, rue Léonard de Vinci**
**F-92230 Gennevillier (FR)**

(74) Mandataire : **Koch, Gustave et al**
**Cabinet PLASSERAUD 84, rue d'Amsterdam**
**F-75009 Paris (FR)**

**EP 0 125 957 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention a pour objet un procédé de contrôle du gonflement des argiles en présence notamment d'eau de mer, plus particulièrement dans le cadre de l'application desdites argiles à la constitution des fluides de forage, dénommés dans la technique « boues de forage ».

On connaît bien l'application des argiles à la constitution des fluides de forage qui sont utilisés notamment pour ramener à la surface les déblais libérés par l'action de l'outil de forage.

Ces fluides sont alors débarrassés des déblais qu'ils ont entraînés, puis ils sont réutilisés, après avoir été « rechargés » en ceux de leurs constituants qui se trouvent épuisés.

Les argiles, de par leur gonflement bien connu en présence d'eau, confèrent à ces fluides une consistance de « boues », d'où l'expression « boues de forage », dont la viscosité doit être telle que les déblais soient correctement entraînés et se déposent le moins possible par sédimentation au repos, sans toutefois opposer une résistance prohibitive à la rotation des éléments constitutifs de l'outil de forage.

De plus, la consistance de la boue doit être telle que soit évitée ce qu'on appelle la « filtration » de l'eau qui entre dans sa constitution, c'est-à-dire le « départ » de cette eau dans les couches géologiques traversées, départ qui se traduirait par un déséquilibre dans la composition de la boue et par le dépôt d'un « gâteau » sur les parois du puits susceptible d'entraîner, une fois qu'il aurait atteint une épaisseur suffisante, des frottements mécaniques importants.

Enfin, lorsque le forage traverse des couches géologiques à base notamment d'argile, la boue ne doit pas provoquer le gonflement de cette argile car un tel gonflement peut entraîner le collage de l'argile au train de tiges au point d'empêcher la poursuite du forage ; le contact de la boue et de la paroi ne doit pas non plus provoquer le dégonflement de l'argile de la paroi, ce qui se traduirait par la formation de cavités, d'éboulements et de tassements dans le puits de forage et, là encore, arrêterait le forage. Enfin, la boue ne doit pas être la cause d'une évolution lente de la couche argileuse qui créerait des pressions assez fortes pour détruire, par exemple, les infrastructures d'un puits en exploitation.

Le comportement des argiles, différent suivant qu'elles sont mises en présence d'eau douce ou d'eau salée, notamment d'eau de mer, est bien connu ; l'eau douce est surtout utilisée pour la constitution des boues dans le cas des forages à terres — mais alors ces boues peuvent éventuellement être mises en présence d'eau salée présente dans certaines couches géologiques que traverse le forage —, alors que l'eau salée, c'est-à-dire en pratique l'eau de mer, est utilisée pour la constitution des boues dans les forages en mer du type « off-shore ».

Le principal type d'argile utilisé pour la constitution des boues de forage est celui de la famille des bentonites.

Celles-ci donnent satisfaction tant que l'eau utilisée est de l'eau douce.

Leur inconvénient est, par contre, de ne pas gonfler en présence d'eau de mer.

Aussi a-t-on recours, pour la constitution des boues de forage avec de l'eau de mer, à un autre type d'argile, l'attapulgite, qui effectivement gonfle en présence d'eau de mer, mais dont les propriétés sont moins bonnes, notamment en ce qui concerne la réduction du filtrat, c'est-à-dire la perte d'eau par filtration que l'on doit alors compenser par des additifs tels que des amidons modifiés.

Une fois que l'homme de l'art a sélectionné l'argile, notamment en fonction de l'emplacement — à terre ou en mer — du forage, il doit sélectionner un certain nombre d'additifs qui sont bien connus et sur l'ensemble desquels il est donc inutile d'insister ici ; grâce à ces additifs, il confère à la boue définitive les susdites propriétés de viscosité, filtrabilité, inertie vis-à-vis de l'argile constitutive de couches géologiques argileuses traversées lors du forage et autres.

Pour rendre la boue inerte vis-à-vis de l'argile constitutive de couches géologiques argileuses traversées lors du forage, l'homme de l'art utilise classiquement divers produits, notamment le chlorure de sodium, le gypse, la chaux, le chlorure de calcium et autres ; le brevet U.S. N° 3 086 937 propose d'améliorer les résultats enregistrés avec ces produits en ayant recours à des tétra(hydroxyalkyl)alkylène diamines ; les résultats mentionnés dans ce brevet montrent que, si ce résultat est bien atteint, il se produit toutefois également une fluidification des boues proprement dites ; ce brevet U.S. décrit des boues de forage contenant lesdites diamines, ces boues étant, de façon classique, à base d'attapulgite lorsque l'eau utilisée pour leur constitution est l'eau de mer, à base de bentonite lorsque l'eau utilisée est de l'eau douce.

Ce brevet n'apporte donc pas de solution au problème posé par l'impossibilité d'utiliser les bentonites lorsque l'eau retenue pour la constitution des boues de forage est l'eau de mer.

Le brevet US N° 3 107 739 décrit l'utilisation de composés propres à être mis en œuvre dans la fabrication de boues de forage préparées à partir de bentonite et d'eau douce.

Le brevet US N° 2 280 995 décrit, quant à lui, l'utilisation pour contrôler la viscosité des boues de forage de dicyandiamide.

Aucun de ces documents ne permet de résoudre le problème auquel l'invention se propose de remédier.

Or, ne serait-ce que d'un point de vue pratique, l'utilisateur aimerait pouvoir utiliser aussi bien les bentonites que l'attapulgite pour les forages en mer.

C'est à ce problème que la Société Demanderesse s'est attachée à apporter une solution.

Et elle a pu trouver, à l'issue de recherches approfondies, qu'il était possible de préparer des boues de forage qui, tout en étant constituées à partir de bentonite et d'eau de mer, répondent aux exigences de la pratique, en procédant successivement :

— dans une première étape ou prédilution, à la préparation d'un mélange concentré ou prémélange à base de bentonite et d'eau douce et,

— dans une deuxième étape, à la dilution, jusqu'à la concentration recherchée, du prémélange avec de l'eau salée, notamment de l'eau de mer, étant entendu qu'une quantité efficace en au moins l'un des composés actifs du groupe comprenant :

le cyanamide, l'hexaméthylènetétramine, la guanidine et l'aminoguanidine,

les composés répondant aux formules :

$$NH_{3-n}[(CH_2)_m-OH]_n \qquad (I)$$

dans laquelle m est égal à 2, 3 ou 4 et n à 1, 2 ou 3 avec la possibilité, lorsque m est égal à 3 ou 4, d'avoir une chaîne ramifiée et

$$NH_2[(CH_2)_m-NH]_n(CH_2)_m-NH_2 \qquad (II)$$

dans laquelle m est égal à 2, 3, 4, 5 ou 6 et n est un nombre entier de 0 à 10,

les dérivés de formule (I) dans laquelle au moins l'un des atomes d'hydrogène mobile portés par l'atome d'azote ou les atomes d'oxygène est substitué par un radical obtenu par polycondensation d'oxydes d'oléfine, de préférence d'éthylène, de propylène ou de butylène, le nombre des motifs d'oxyde d'oléfine étant de 1 à 20, de préférence de 1 à 10, ou par un groupement hydrocarboné aliphatique en $C_1$ à $C_4$,

les dérivés de formule (II) dans laquelle au moins l'un des atomes d'hydrogène mobile portés par un atome d'azote est substitué par un radical obtenu par polycondensation d'oxydes d'oléfine, de préférence d'éthylène, de propylène ou de butylène, le nombre des motifs d'oxyde d'oléfine étant de 1 à 20, de préférence de 1 à 10, ou par un groupement hydrocarboné aliphatique en $C_1$ à $C_4$, est ajoutée :

— soit telle quelle dans l'eau douce de départ ou dans le prémélange, ou encore dans la boue finale obtenue par dilution du prémélange avec de l'eau salée,

— soit sous forme salifiée dans le prémélange, de préférence dans l'eau de mer de dilution du prémélange et, plus préférentiellement encore, dans le mélange dilué à l'eau de mer.

Suivant un mode de réalisation avantageux du susdit procédé, le composé actif éventuellement salifié de formule (II) est l'un de ceux du groupe obtenu lorsque :

n = 0 et m égal à 2, 3, 4, 5 ou 6
n = 1 et m égal à 2 ou 3
n = 2 et m = 2,

les atomes d'hydrogène mobile portés par les atomes d'azote n'étant pas substitués.

Suivant un autre mode de réalisation avantageux du susdit procédé, le composé actif éventuellement salifié est l'un de ceux du groupe comprenant l'éthylènediamine, la propylènediamine, la butylènediamine, l'hexaméthylènediamine, la diéthylènetriamine, la dipropylènetriamine, la triéthylènetétramine, les mono-, di- et triéthanolamine, les monométhyl- et monoéthyl-monoéthanolamine, la monométhyldiéthanolamine, les mono-, di- et triisopropanolamine, la diméthylaminopropylamine, le cyanamide, l'aminoguanidine, la guanidine, l'hexaméthylènetétramine.

Suivant un autre mode de réalisation avantageux du susdit procédé, lorsque le composé actif utilisé est sous forme salifiée, l'anion associé est celui d'un acide minéral ou organique, choisi notamment dans le groupe de ceux comprenant les acides chlorhydrique, sulfurique, sulfamique, phosphorique, formique et acétique.

Suivant un autre mode de réalisation avantageux du susdit procédé, la concentration en bentonite du prémélange est choisie dans la gamme d'environ 500 à 20 g/l, de préférence de 400 à 50 g/l, et la concentration en bentonite de la boue après dilution avec de l'eau de mer dans la gamme d'environ 200 à 5 g/l, de préférence de 100 à 10 g/l.

Suivant un autre mode de réalisation avantageux du susdit procédé, la quantité efficace en composé actif est telle que la proportion de composé actif présent dans la boue de forage après dilution est comprise dans la gamme d'environ 0,05 à 10 % en poids, de préférence de 0,1 à 2 % en poids, que ce composé ait été introduit sous forme non salifiée, soit dans l'eau douce de départ, soit dans le prémélange, ou sous forme salifiée, soit dans l'eau de mer de dilution du prémélange, soit dans le mélange dilué ou l'eau de mer, étant entendu que, dans le cas où l'introduction se fait dans l'eau douce de départ ou dans le prémélange, les proportions de composé actif présentes à ce stade sont déterminées en fonction de la dilution ultérieure.

Dans ce qui suit, par l'étude du comportement des boues obtenues selon l'invention et pour illustrer les susdites indications générales, on décrit un grand nombre d'expériences dans lesquelles on fait varier les divers paramètres qui viennent d'être envisagés, à savoir notamment la nature du composé actif et le moment de son introduction, étant entendu que l'on dit que :

— le composé actif est introduit en « position 1 » lorsqu'on le mélange à l'eau douce utilisée pour la

constitution du prémélange,

— le composé actif est introduit en « position 2 » lorsqu'on l'ajoute au prémélange, et que

— le composé actif est introduit en « position 3 » lorsqu'on l'ajoute à la boue obtenue par dilution du prémélange.

Le comportement des boues est illustré par l'étude de leur rhéologie, cette étude reposant sur les mesures des viscosités de ces boues.

Pour cette étude, on peut avoir recours à un viscosimètre Baroid du type « rhéomètre électronique n° 286 à vitesse variable » commercialisé par la Société N.L. Baroïd Petroleum Services (N.L. Industries Inc., P.O. Box 1675, Houston, Texas).

Les mesures de la viscosité ont été effectuées à la température ambiante, au temps zéro et au bout de quatre jours.

On définit respectivement par L 600, L 300, L 200 et L 100 les lectures effectuées aux vitesses de 600, 300, 200 et 100 tours/minute.

La connaissance de ces valeurs mesurées pour la viscosité permet de calculer les grandeurs $V_A$, $V_p$ et $Y_V$ définies ci-après, qui sont caractéristiques des propriétés rhéologiques des boues.

Ainsi, la valeur de ce qu'on appelle la « viscosité apparente » $V_A$, exprimée en centipoises, est égale à L 600 divisé par deux (par construction de l'appareil).

La valeur de la « viscosité plastique » $V_p$, toujours en centipoises, est égale à L 600-L 300 (par construction de l'appareil).

Pour obtenir les valeurs $V_A$ et $V_p$ dans le système SI (c'est-à-dire en Pa · s), il suffit de multiplier les valeurs obtenues par $10^{-3}$.

La valeur du « seuil d'écoulement plastique » $Y_V$, en anglais « Yield Point », est égale à la différence, multipliée par 2, des valeurs de la viscosité apparente et de la viscosité plastique, c'est-à-dire à $(V_A-V_p)2$. Le « Yield Point » représente la tension minimale de cisaillement en dessous de laquelle il n'y a pas d'écoulement ; cette tension minimale de cisaillement est exprimée en livres/100 pieds carrés ; elle correspond à ce qu'on appelle la « résistance de gel », en anglais « gel strength ».

L'appareil Baroid évoqué ci-dessus est conçu de telle sorte qu'à partir des lectures effectuées, on peut calculer la valeur de « Yield Point » en livres/100 pieds carrés ; pour obtenir les valeurs correspondantes dans le système SI (c'est-à-dire en Pa), il suffit de multiplier les valeurs données dans les tableaux pour $Y_V$ par 0,4789.

Une autre expérience importante est celle qui porte sur l'importance du filtrat ; elle permet d'évaluer la quantité de liquide qui filtrera dans les parois plus ou moins perméables du trou de forage. Il est important de connaître les caractéristiques de filtration. En effet, par exemple les hauts filtrats ou filtrats importants peuvent déliter les formations géologiques délicates et favoriser les éboulements. De plus, le gâteau déposé sur les parois du trou de forage peut être épais au point d'empêcher le passage du tricône lors des manœuvres de changement d'outils.

Pour évaluer l'importance du filtrat, on a recours à un appareil Fann (Mud Testing Equipment) commercialisé par la Société Fann Instrument Corporation, Houston, Texas, ou à un appareil du type filtre-presse commercialisé par la Société Baroïd.

La description des divers types d'appareils précités y compris celle du susdit rhéomètre peuvent être trouvées dans l'ouvrage : « Boues de forage » de C. Garcia et P. Parigot (Publication de l'Institut Français du Pétrole, Editions Technip, 1968, pages 61 à 66).

De l'ensemble d'expériences illustrées par les exemples qui suivent, il résulte que l'introduction du composé actif non salifié en position 1 ou en position 2 ou l'introduction du composé actif salifié en position 3 permettent non seulement d'assurer le gonflement des bentonites en présence d'eau de mer, mais de plus de faire en sorte que les boues ainsi préparées ne provoquent pas le gonflement de couches géologiques à base d'argile traversées lors des forages.

Dans les exemples qui suivent, certaines des valeurs enregistrées pourront sembler très élevées et en apparence inadaptées à un forage réel. En fait, elles sont fournies pour illustrer l'invention et elles indiquent plutôt la grande efficacité des produits conformes à l'invention, mis en œuvre selon le procédé revendiqué ; dans la pratique, il suffit de diminuer la dose en composé actif et/ou la concentration en argile pour obtenir un contrôle de la viscosité proche de la valeur souhaitée.

## Exemple 1

Dans ce premier exemple, on effectue les mesures des valeurs de L 600 et de $Y_V$ d'une part au temps t = 0, d'autre part au temps t = 4 jours, pour un certain nombre d'agents de contrôle de la viscosité illustratifs de l'invention et pour chacun des cas suivants : introduction de l'agent en position 1, puis en position 2 et enfin en position 3.

L'argile utilisée est une argile du type bentonite du Wyoming ; elles est appelée argile A.

On fait d'abord une prédilution à 400 g/l en eau déminéralisée, puis une dilution à 100 g/l en eau de mer.

Les résultats des mesures de L 600 et de $Y_V$ pour les temps t = 0 et t = 4 jours sont réunis dans le tableau I ci-après.

Dans ce tableau, « n.c. » signifie « non calculable ».

Les agents essayés sont identifiés par des symboles de A à R signifiant :
A : témoin
B : éthylène diamine
C : triéthylène tétramine
D : N-(amino-2-éthyl)monoéthanolamine
E : cyanamide
F : éthylène diamine condensée avec 4 groupes d'oxyde de propylène
G : diméthylamino propylamine
K : chlorhydrate d'aminoguanidine
L : $NH_2\ (CH_2)_2—NH_2$, 1HCl
M : $NH_2\ (CH_2)_2—NH_2$, 2HCl
N : $NH_2\ [(CH_2)_2—NH]_2—(CH_2)_2—NH_2$, 2HCl
P : $NH_2\ [(CH_2)_2—NH]^2—(CH_2)_2—NH_2$, 2,8HCl
R : $NH_2\ [(CH_2)_2—NH]_2—(CH_2)_2—NH_2$, 3,5HCl

Tableau I

| Agent N° | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| A | 0 | 46 | 34 | 44 | 34 | 46 | 34 | 44 | 34 | 46 | 34 | 44 | 34 |
| B | 1 | 95 | 81 | 166 | 158 | 68 | 60 | 75 | 75 | >320 | n.c. | >320 | n.c. |
| C | 1 | >320 | n.c. | >320 | n.c. | 122 | 118 | 146 | 146 | 222 | 198 | >320 | n.c. |
| D | 1 | | | | | | | | | 228 | 114 | 255 | 231 |
| E | 1 | | | | | | | | | 54 | 40 | 63 | 51 |
| F | 1 | 28 | 18 | 22 | 14 | | | | | 138 | 134 | 104 | 104 |
| G | 1 | | | | | | | | | 166 | 118 | 150 | 134 |
| | 0,5 | | | | | | | | | 133 | 111 | 85 | 73 |
| K | 1 | 22 | 14 | 20 | 14 | 60 | 40 | 58 | 42 | 260 | 254 | 189 | 165 |
| L | 1 | 6 | 2 | 6 | 2 | | | | | 40 | 32 | 44 | 30 |
| M | 1 | 6 | 2 | 6 | 2 | | | | | 65 | 71 | 61 | 55 |
| N | 1 | 6 | 2 | 6 | 2 | 21 | 13 | 20 | 14 | 128 | 124 | 118 | 114 |
| P | 1 | 7 | 3 | 7 | 3 | | | | | 115 | 109 | 110 | 102 |
| R | 1 | 7 | 1 | 7 | 1 | | | | | 85 | 81 | 76 | 76 |

A l'examen des résultats de mesure réunis dans le tableau I, il apparaît que :

— les agents de contrôle non salifiés « épaississent » la boue lorsqu'ils sont introduits en position 1, 2 ou 3, sauf en ce qui concerne le composé F lorsqu'il est introduit en position 1,

— les agents de contrôle salifiés « fluidifient » la boue lorsqu'ils sont introduits en position 1, « épaississent » la boue lorsqu'ils sont introduits en position 3 et ont un effet variable lorsqu'ils sont introduits en position 2.

En remplaçant l'argile A par une attapulgite (de la marque « Clarsol ATC ») ou argile C, on mesure les valeurs suivantes :

— pour le témoin (0 % d'agent de contrôle) :

• introduction dans les positions 1, 2 et 3
- L 600 à t = 0 — 103
- $Y_V$ à t = 0 — 73
- L 600 à t = 4 jours — 86
- $Y_V$ à t = 4 jours — 62

— pour le chlorhydrate d'aminoguanidine (1 %) à titre d'agent de contrôle :

• introduction en position 1
- L 600 à t = 0 — 40
- $Y_V$ à t = 0 — 26
- L 600 à t = 4 jours — 40
- $Y_V$ à t = 4 jours — 24

• introduction en position 2
- expérience non réalisée

• introduction en position 3
- L 600 à t = 0 — 164
- $Y_V$ à t = 0 — 116
- L 600 à t = 4 jours — 177
- $Y_V$ à t = 4 jours — 123

Il résulte de ces mesures que le produit salifié, également lorsque l'argile est une attapulgite, « fluidifie » la boue lorsqu'il est introduit en position 1 et l'« épaissit » lorsqu'il est introduit en position 3.

Exemple 2

On étudie l'influence de la nature de l'eau utilisée, d'une part, pour la prédilution à 400 g/l et, d'autre part, pour la dilution à 100 g/l.

L'argile utilisée est l'argile A.

Les mesures de L 600 et $Y_V$ à t = 0 et à t = 4 jours sont effectuées chaque fois, d'une part, pour le témoin (aucun agent) et, d'autre part, pour une concentration de 1 % d'aminoguanidine, HCl.

Les types d'eau utilisés sont :

| | |
|---|---|
| Tableau II | prédilution à 400 g/l en eau déminéralisée<br>dilution à 100 g/l en eau déminéralisée |
| Tableau III | prédilution à 400 g/l en eau de mer<br>dilution à 100 g/l en eau de mer |
| Tableau IV | prédilution à 400 g/l en eau de ville<br>dilution à 100 g/l en eau de ville |
| Tableau V | prédilution à 400 g/l en eau de ville<br>dilution à 100 g/l en eau de mer |
| Tableau VI | prédilution à 400 g/l en eau de ville séquestrée<br>dilution à 100 g/l en eau de ville séquestrée. |

Les résultats enregistrés sont :

Tableau II

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 67 | 27 | 123 | 61 | 67 | 27 | 123 | 61 | 67 | 27 | 123 | 61 |
| Amino guanidine HCl | 1 | 7 | 2 | 7 | 2 | | | | | >320 | n.c. | 203 | 161 |

Il résulte de ce tableau qu'en position 1 les agents selon l'invention salifiés fluidifient alors qu'en position 3 ils épaississent.

Tableau III

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 13 | 7 | 13 | 7 | 13 | 7 | 13 | 7 | 13 | 7 | 13 | 7 |
| Amino-guanidine HCl | 1 | | | | | | | | | 8 | 2 | 8 | 2 |

Il résulte de ce tableau que, lorsque la prédilution est effectuée avec de l'eau de mer et que l'argile est une bentonite, même le produit salifié conforme à l'invention, introduit en position 3, fluidifie au lieu d'épaissir.

Tableau IV

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 34 | 10 | - | - | 34 | 10 | - | - | 34 | 10 | - | - |
| Amino-guanidine HCl | 1 | | | | | | | | | 313 | 281 | 228 | 162 |

De ce tableau, il résulte de nouveau que les produits salifiés selon l'invention épaississent en position 3 ; le résultat enregistré est toutefois moins élevé que pour le tableau II, l'eau de ville étant plus « dure » que l'eau déminéralisée.

Tableau V

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 34 | 24 | - | - | 34 | 24 | - | - | 34 | 24 | - | - |
| Amino-guanidine HCl | 1 | | | | | | | | | 205 | 185 | 172 | 160 |

Les résultats réunis dans ce tableau illustrent bien le procédé selon l'invention. La prédilution étant faite à l'eau de ville, les agents salifiés selon l'invention introduits en position 3 épaississent.

Tableau VI

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 48 | 16 | 48 | 16 | 48 | 16 | 48 | 16 | 48 | 16 | 48 | 16 |
| Amino-guanidine HCl | 1 | | | | | | | | | >320 | n.c. | 250 | 182 |

Les résultats réunis dans ce tableau confirment les enseignements déjà soulignés ; ils sont à comparer à ceux du tableau II.

## Exemple 3

Cet exemple illustre l'influence de la dose d'agent conforme à l'invention.

L'argile utilisée est une bentonite du Wyoming différente de celle utilisée dans les exemples précédents.

La prédilution à 400 g/l est faite avec de l'eau déminéralisée et la dilution à 100 g/l avec de l'eau de mer.

Les valeurs mesurées sont les mêmes que dans les autres exemples.

Les résultats sont réunis dans le tableau VII.

Tableau VII

| Agent | dose en % disp. finale | Résultat des mesures après introduction en | | | | | | | | | | | |
|---|---|---|---|---|---|---|---|---|---|---|---|---|---|
| | | Position 1 | | | | Position 2 | | | | Position 3 | | | |
| | | t=0 | | t=4 j. | | t=0 | | t=4 j. | | t=0 | | t=4 j. | |
| | | L600 | $Y_V$ | L600 | $Y_V$ | L600 | $Y_V$ | L600 | $Y_V$ | L600 | $Y_V$ | L600 | $Y_V$ |
| Témoin | 0 | 38 | 26 | 38 | 24 | 38 | 26 | 38 | 24 | 38 | 26 | 38 | 24 |
| Amino-guanidine HCl | 0,2 | | | | | | | | | 62 | 50 | 52 | 34 |
| " | 0,4 | | | | | | | | | 167 | 143 | 126 | 106 |
| " | 0,8 | | | | | | | | | 274 | 242 | 208 | 178 |
| " | 1 | | | | | | | | | 291 | 273 | 251 | 227 |
| " | 1,2 | | | | | | | | | 286 | 268 | 252 | 230 |
| " | 1,4 | | | | | | | | | 287 | 269 | 262 | 242 |

Il résulte de ces valeurs que l'épaississement conféré par l'agent conforme à l'invention introduit sous forme salifiée en position 3 augmente avec la dose pour tendre à devenir constant lorsque cette dose dépasse 1,2 à 1,4 % sur la dispersion finale.

## Exemple 4

Cet exemple illustre l'influence de la concentration de la prédilution et de celle de la dilution.

L'argile utilisée est celle de l'exemple 3. Les prédilutions sont faites avec de l'eau déminéralisée et les dilutions finales avec de l'eau de mer.

Les mesures effectuées sont toujours les mêmes, seule l'addition en position 3 ayant toutefois été étudiée.

Les résultats sont réunis dans le tableau VIII.

Tableau VIII

| Concentration prédilution et dilution | Agent | % agent s/disp. finale | Introduction agent en position 3 | | | |
|---|---|---|---|---|---|---|
| | | | t=0 | | t=4 j. | |
| | | | L600 | $Y_V$ | L600 | $Y_V$ |
| Prédilution : 200 g/l | Témoin | 0 | 17 | 9 | - | - |
| Dilution : 50 g/l | Aminoguanidine, HCl | 1 | 152 | 138 | 153 | 133 |
| Prédilution : 300 g/l | Témoin | 0 | 29 | 17 | - | - |
| Dilution : 75 g/l | Aminoguanidine, HCl | 1 | 274 | 260 | 225 | 217 |
| Prédilution : 400 g/l | Témoin | 0 | 38 | 26 | 38 | 24 |
| Dilution : 100 g/l | Aminoguanidine, HCl | 1 | 271 | 273 | 251 | 227 |

Il résulte de ces valeurs que l'effet épaississant conféré par l'agent conforme à l'invention introduit sous forme salifiée en position 3 est maintenu quand on fait varier la concentration en argile dans la boue.

Exemple 5

On illustre par cet exemple l'influence que la boue peut avoir sur une couche géologique argileuse traversée par le forage.

On sait que c'est le « filtrat », c'est-à-dire l'eau, qui se sépare de la boue qui pénètre dans la couche argileuse.

Ce filtrat ne doit pas faire gonfler la boue constitutive de la couche.

Pour réaliser cette démonstration, on fabrique une première boue et on relève les gonflements ou épaississements obtenus, les deux agents de contrôle essayés et comparés au témoin (pas d'agent de contrôle) étant le chlorhydrate d'aminoguanidine et la triéthylène tétramine qui sont introduits en position 3 à la dose de 1 % sur la dispersion finale ; on effectue une première expérience en procédant à une prédilution à 400 g/l et à la dilution subséquente à 100 g/l en ayant recours à de l'eau déminéralisée, puis une seconde expérience dans laquelle la prédilution est effectuée avec l'eau déminéralisée et la dilution avec de l'eau de mer ; les mesures effectuées sont les mêmes que dans les exemples précédents.

On réalise ensuite la filtration de la boue obtenue en ayant recours à un filtre-presse Baroid et on utilise le filtrat ainsi obtenu pour préparer une nouvelle boue à 100 g/l, l'argile utilisée dans les deux étapes étant la bentonite de l'exemple 1. La reconstitution de la boue à l'aide du filtrat et sa rhéologie illustrent bien entendu ce qui se passe au niveau de l'influence du filtrat sur une couche argileuse traversée par le forage.

Les résultats enregistrés sont réunis dans le tableau IX.

(Voir tableau IX page 10)

Tableau IX

| Type de dilution | Agent | % agent s/disp. finale | Introduction agent en position 3 — t=0 L600 | t=0 $Y_V$ | t=4 j. L600 | t=4 j. $Y_V$ |
|---|---|---|---|---|---|---|
| Prédilution: 400 g/l en eau déminéralisée<br>Dilution: 100 g/l en eau déminéralisée | Témoin | 0 | 67 | 27 | 123 | 61 |
| | Aminoguanidine, HCl | 1 | > 320 | n.c. | 203 | 161 |
| Prédilution: 400 g/l en eau déminéralisée<br>Dilution: 100 g/l en eau de mer | Témoin | 0 | 46 | 34 | 44 | 34 |
| | Aminoguanidine, HCl | 1 | 260 | 254 | 189 | 165 |
| | Triéthylène tétramine | 1 | 222 | 198 | >320 | n.c. |
| FILTRATION : toutes les boues | | | | | | |
| Dilution à 100 g/l de la même argile dans les filtrats correspondants identifiés de nouveau | Témoin | 0 | 36 | 10 | 44 | 34 |
| | Aminoguanidine, HCl | 1 | 27 | 11 | 48 | 20 |
| | Témoin | 0 | 7 | 1 | 7 | 1 |
| | Aminoguanidine, HCl | 1 | 7 | 1 | 7 | 1 |
| | Triéthylène tétramine | 1 | 9 | 5 | 9 | 5 |

On signale que la filtration est plus longue dans le cas des boues comportant un agent de contrôle conforme à l'invention que dans le cas du témoin.

Des résultats réunis dans ce tableau, il apparaît bien que les boues obtenues à l'aide d'un filtrat contenant un agent de contrôle conforme à l'invention — qui avait pourtant fait gonfler la boue avant filtration — ne gonflent pas.

Une telle boue empêche donc la couche argileuse traversée de gonfler.

Exemple 6

Par cet exemple, on illustre l'influence de l'agitation sur la rhéologie des boues, cette agitation pouvant intervenir, comme on le constate, à divers moments de la préparation.

Dans les expériences effectuées, on distingue les stades suivants :

Stade 1 : prédilution à 400 g/l en eau déminéralisée.

Stade 2 : dilution à 100 g/l en eau de mer.

Stade 3 : addition de l'agent s'il y a lieu.

Stade 4 : agitation après addition de l'agent.

A ces différents stades, on a soumis les boues formées aux conditions d'agitation ou de repos réunies dans le tableau X.

On a enfin effectué les mêmes mesures que dans les autres exemples. Les résultats sont également réunis au tableau X.

Tableau X

| Repos ou agitation — Stade 1 | Stade 2 | Stade 4 | Agent | % sur disp. finale | t=0 L600 | t=0 $Y_V$ | t=4 j. L600 | t=4 j. $Y_V$ |
|---|---|---|---|---|---|---|---|---|
| Prép.: 5 min.<br>Repos: 2 h. | Agitation à 300 t/mn sur 5 min. | Témoin: agitation nulle | Témoin | 0 | 43 | 31 | 46 | 30 |
| | | Additif: 5 mn à 2700 t/min. | Aminoguanidine, HCl | 1 | > 320 | n.c. | 303 | 289 |

Tableau X (Suite)

| Repos ou agitation | | | Agent | % sur disp. finale | t=0 | | t=4 j. | |
|---|---|---|---|---|---|---|---|---|
| Stade 1 | Stade 2 | Stade 4 | | | L600 | $Y_V$ | L600 | $Y_V$ |
| Prép.: 5 min. Repos: 0 | 50 min. à 2700 t/mn | Témoin: agitation nulle | Témoin | 0 | 33 | 19 | 37 | 21 |
| | | Additif: 5 mn à 2700 t/min. | Aminoguanidine, HCl | 1 | 305 | 285 | 272 | 252 |
| Prép.: 5 min. Repos: 0 | Agitation nulle Repos nul | Témoin: 50 mn à 2700 t/min. | Témoin | 0 | 33 | 19 | 37 | 21 |
| | | Additif: 50 mn à 2700 t/min. | Aminoguanidine, HCl | 1 | 197 | 167 | 192 | 156 |

De l'examen des résultats réunis dans ce tableau, il apparaît que l'agitation aux différents stades joue effectivement un rôle, mais que celui-ci est du « second ordre » par rapport à l'influence des éléments caractéristiques de l'invention (agent et caractéristiques de procédé).

**Revendications**

1. Procédé de contrôle du gonflement des argiles du type bentonite en présence d'eau de mer dans la préparation des boues de forage, caractérisé par le fait que l'on procède successivement :

— dans une première étape ou prédilution, à la préparation d'un mélange concentré ou prémélange à base de bentonite et d'eau douce et,

— dans une deuxième étape, à la dilution, jusqu'à la concentration recherchée, du prémélange avec de l'eau salée, notamment de l'eau de mer,

étant entendu qu'une quantité efficace en au moins l'un des composés actifs du groupe comprenant :

le cyanamide, l'hexaméthylènetétramine, la guanidine et l'aminoguanidine,

les composés répondant aux formules :

$$NH_{3-n}[(CH_2)_m-OH]_n \quad (I)$$

dans laquelle m est égal à 2, 3 ou 4 et n à 1, 2 ou 3 avec la possibilité, lorsque m est égal à 3 ou 4, d'avoir une chaîne ramifiée et

$$NH_2[(CH_2)_m-NH]_n(CH_2)_m-NH_2 \quad (II)$$

dans laquelle m est égal à 2, 3, 4, 5 ou 6 et n est un nombre entier de 0 à 10.

les dérivés de formule (I) dans laquelle au moins l'un des atomes d'hydrogène mobile portés par l'atome d'azote ou les atomes d'oxygène est substitué par un radical obtenu par polycondensation d'oxydes d'oléfine, de préférence d'éthylène, de propylène ou de butylène, le nombre des motifs d'oxyde d'oléfine étant de 1 à 20, de préférence de 1 à 10, ou par un groupement hydrocarboné aliphatique en $C_1$ à $C_4$.

les dérivés de formule (II) dans laquelle au moins l'un des atomes d'hydrogène mobile portés par un atome d'azote est substitué par un radical obtenu par polycondensation d'oxydes d'oléfines, de préférence d'éthylène, de propylène ou de butylène, le nombre des motifs d'oxyde d'oléfine étant de 1 à 20, de préférence de 1 à 10, ou par un groupement hydrocarboné aliphatique en $C_1$ à $C_4$

est ajoutée :

— soit telle quelle dans l'eau douce de départ ou dans le prémélange, ou encore dans la boue finale obtenue par dilution du prémélange avec de l'eau salée,

— soit sous forme salifiée dans le prémélange, de préférence dans l'eau de mer de dilution du prémélange et, plus préférentiellement encore, dans le mélange dilué à l'eau de mer.

2. Procédé selon la revendication 1, caractérisé par le fait que le composé actif éventuellement salifié de formule (II) est l'un de ceux du groupe obtenu lorsque :

n = 0 et m égal à 2, 3, 4, 5 ou 6,

n = 1 et m égal à 2 ou 3,

n = 2 et m = 2,

les atomes d'hydrogène mobile portés par les atomes d'azote n'étant pas substitués.

3. Procédé selon la revendication 1, caractérisé par le fait que le composé actif éventuellement salifié est l'un de ceux du groupe comprenant l'éthylènediamine, la propylènediamine, la butylènediamine,

l'hexaméthylènediamine, la diéthylènetriamine, la dipropylènetriamine, la triéthylènetétramine, les mono-, di- et triéthanolamine, les monométhyl- et monoéthyl-monoéthanolamine, la monométhyl-diéthanolamine, les mono-, di- et triisopropanolamine, la diméthylaminopropylamine, le cyanamide, l'aminoguanidine, la guanidine, l'hexaméthylènetétramine.

4. Procédé selon l'une des revendications 1, 2 et 3, caractérisé par le fait que lorsque le composé actif utilisé est sous forme salifiée, l'anion associé est celui d'un acide minéral ou organique, choisi notamment dans le groupe de ceux comprenant les acides chlorhydrique, sulfurique, sulfamique, phosphorique, formique et acétique.

5. Procédé selon l'une des revendications 1, 2, 3 et 4, caractérisé par le fait que la concentration en bentonite du prémélange est choisie dans la gamme d'environ 500 à 20 g/l, de préférence de 400 à 50 g/l, et la concentration en bentonite de la boue après dilution avec de l'eau de mer dans la gamme d'environ 200 à 5 g/l, de préférence de 100 à 10 g/l.

6. Procédé selon l'une des revendications 1, 2, 3, 4 et 5, caractérisé par le fait que la quantité efficace en composé actif est telle que la proportion de composé actif présent dans la boue de forage après dilution est comprise dans la gamme d'environ 0,05 à 10 % en poids, de préférence de 0,1 à 2 % en poids, que ce composé ait été introduit sous forme non salifiée, soit dans l'eau douce de départ, soit dans le prémélange, ou sous forme salifiée, soit dans l'eau de mer de dilution du prémélange, soit dans le mélange dilué à l'eau de mer, étant entendu que, dans le cas où l'introduction se fait dans l'eau douce de départ ou dans le prémélange, les proportions de composé actif présentes à ce stade sont déterminées en fonction de la dilution ultérieure.

**Claims**

1. Process for controlling the swelling of clays of the bentonite type in the presence of sea-water in the preparation of drilling fluids, characterized by the fact that there are carried out successively :

— in a first or predilution step, the preparation of a concentrated mixture or premixture or premix, based on bentonite and soft water and,

— in a second step, the dilution, up to the desired concentration, of the permix with salt water, particularly sea-water,

it being understood that an effective amount of at least one of the active compounds of the group comprising :

cyanamide, hexamethylenetetramine, guanidine and aminoguanidine,

compounds corresponding to the formulae :

$$NH_{3-n}[(CH_2)_m-OH]_n \qquad (I)$$

in which m is equal to 2, 3 or 4 and n to 1, 2 or 3 with the possibility, when m is equal to 3 or 4, of having a branched chain and

$$NH_2[(CH_2)_m-NH]_n(CH_2)_m-NH_2 \qquad (II)$$

in which m is equal to 2, 3, 4, 5 or 6 and n is a whole number from 0 to 10,

derivatives of formula (I) in which at least one of the mobile hydrogen atoms borne by the nitrogen atom or the oxygen atoms is substituted by a radical obtained by polycondensation of olefine oxides, preferably ethylene, propylene or butylene, the number of olefine oxide units being from 1 to 20, preferably from 1 to 10, or by an aliphatic hydrocarbon group of $C_1$ to $C_4$,

derivatives of formula (II) in which at least one of the mobile hydrogen atoms borne by a nitrogen atom is substituted by a radical obtained by polycondensation of olefine oxides, preferably ethylene, propylene or butylene, the number of olefine oxide units being from 1 to 20, preferably from 1 to 10, or by an aliphatic hydrocarbon group of $C_1$ to $C_4$

is added :

— either as such to the starting soft water or to the premix, or also in the final drilling fluid obtained by dilution of the premix with salt water,

— or, in salified form to the premix, preferably in the diluting sea-water of the premix and, more preferably still, to the mixture diluted with sea-water.

2. Process according to claim 1, characterized by the fact that the active compound optionally salified of formula (II) is one of those of the group obtained when :

n = 0 and m equal to 2, 3, 4, 5 or 6

n = 1 and m equal to 2 or 3,

n = 2 and m = 2,

the mobile hydrogen atoms borne by the nitrogen atoms not being substituted.

3. Process according to claim 1, characterized by the fact that the active compound optionally salified is one of those of the group comprising ethylenediamine, propylenediamine, butylenediamine, hexamethylenediamine, diethylenetriamine, dipropylenetriamine, triethylenetétramine, mono-, di- and

triethanolamine, monomethyl- and monoethyl-monoethanolamine, monomethyl-diethanolamine, mono-, di- and triisopropanolamine, dimethylaminopropylamine, cyanamide, aminoguanidine, guanidine, hexamethylenetetramine.

4. Process according to one of claims 1, 2 and 3, characterized by the fact that, when the active compound used is in salified form, the associated anion is that of an inorganic or organic acid, selected particularly from the group of those comprising hydrochloric, sulfuric, sulfamic, phosphoric, formic and acetic acids.

5. Process according to one of claims 1, 2, 2 and 4, characterized by the fact that the concentration of bentonite of the premix is selected in the range of about 500 to 20 g/l, preferably from 400 to 50 g/l, and the concentration of bentonite of the drilling fluid after dilution with sea-water in the range of about 200 to 5 g/l, preferably from 100 to 10 g/l.

6. Process according to one of claims 1, 2, 3, 4 and 5, characterized by the fact that the effective amount of active compound is such that the proportion of active compound present in the drilling fluid after dilution is comprised in the range of about 0.05 to 10 % by weight, preferably from 0.1 to 2 % by weight, this compound having been introduced in unsalified form, either into the starting soft water, or into the premix, or in salified form, either into the diluting sea-water of the premix, or into the mixture diluted with sea-water, it being understood that, in the case where the introduction is done into the starting soft water or into the premix, the proportions of the active compound present at this stage are determined according to the subsequent dilution.

**Patentansprüche**

1. Verfahren zur Regelung der Quellung von Tonen vom Bentonit-Typus in Gegenwart von Meerwasser in der Herstellung von Bohrschlämmen, dadurch gekennzeichnet, daß man aufeinanderfolgend :

— in einer ersten Stufe oder Vorverdünnung die Herstellung eines konzentrierten Gemisches oder Vorgemisches auf der Basis von Bentonit und Süßwasser und

— in einer zweiten Stufe eine Verdünnung des Vorgemisches mit Salzwasser, insbesondere Meerwasser, bis auf die gewünschte Konzentration vornimmt,

wobei eine wirksame Menge an wenigstens einer der aktiven Verbindungen aus der Gruppe, umfassend :

Cyanamid, Hexamethylentetramin, Guanidin und Aminoguanidin,

Verbindungen entsprechend den Formeln :

$$NH_{3-n}[(CH_2)_m—OH]_n, \quad (I)$$

worin m den Wert 2, 3 oder 4 aufweist und n den Wert 1, 2 oder 3 hat, wobei dann, wenn m 3 oder 4 bedeutet, eine verzweigte Kette vorliegen kann, und

$$NH_2[(CH_2)_m—NH]_n(CH_2)_m—NH_2, \quad (II)$$

worin m den Wert 2, 3, 4, 5 oder 6 aufweist und n eine ganze Zahl von 0 bis 10 bedeutet,

Derivate der Formel (I), in welcher wenigstens eins der beweglichen Wasserstoffatome, die vom Stickstoffatom oder den Sauerstoffatomen getragen werden, durch einen Rest substituiert ist, der durch Polykondensation von Olefinoxiden, insbesondere von Ethylen-, Propylen- oder Butylenoxid, erhalten ist, wobei die Anzahl der Olefinoxidreste von 1 bis 20, vorzugsweise von 1 bis 10 beträgt, oder durch eine aliphatische $C_1$-$C_4$-Kohlenwasserstoffgruppe substituiert ist,

Derivate der Formel (II), in welcher wenigstens eins der beweglichen Wasserstoffatome, die von einem Stickstoffatom getragen werden, durch einen Rest substituiert ist, der durch Polykondensation von Olefinoxiden, vorzugsweise von Ethylen-, Propylen- oder Butylenoxid, erhalten worden ist, wobei die Anzahl der Olefinoxidreste von 1 bis 20, vorzugsweise 1 bis 10 beträgt, oder durch eine aliphatische $C_1$-$C_4$-Kohlenwasserstoffgruppe substituiert ist,

zugesetzt wird,

— und zwar entweder als solche zu dem Ausgangs-Süßwasser oder zum Vorgemisch, oder auch zu dem durch Verdünnen des Vorgemisches mit Salzwasser erhaltenen Endschlamm,

— oder in Salzform zu dem Vorgemisch, bevorzugt zum Verdünnungs-Meerwasser des Vorgemisches und, noch stärker bevorzugt, zu dem mit dem Meerwasser verdünnten Gemisch.

2. Verfahren nach Anspruch 1, dadurch gekennzeichnet, daß die gegebenenfalls in Salzform vorliegende aktive Verbindung der Formel (II) eine aus der Gruppe jener Verbindungen ist, worin :

n = 0 und m = 2, 3, 4, 5 oder 6

n = 1 und m = 2 oder 3

n = 2 und m = 2,

wobei die von den Stickstoffatomen getragenen beweglichen Wasserstoffatome nicht substituiert sind.

3. Verfahren nach Anspruch 1, dadurch gekennzeichnet, daß die gegebenenfalls in Salzform vorliegende aktive Verbindung eine aus der Gruppe jener Verbindungen ist, die Ethylendiamin,

Propylendiamin, Butylendiamin, Hexamethylendiamin, Diethylentriamin, Dipropylentriamin, Triethylentetramin, Mono-, Di- und Triethanolamin, Monomethyl- und Monoethylmonoethanolamin, Monomethyldiethanolamin, Mono-, Di- und Triisopropanolamin, Dimethylaminopropylamin, Cyanamid, Aminoguanidin, Guanidin und Hexamethylentetramin umfaßt.

4. Verfahren nach einem der Ansprüche 1, 2 und 3, dadurch gekennzeichnet, daß bei Verwendung der aktiven Verbindung in Salzform das assoziierte Anion dasjenige einer Mineralsäure oder organischen Säure, ausgewählt insbesondere aus der Gruppe jener Säuren, die Chlorwasserstoffsäure, Schwefelsäure, Sulfaminsäure, Phosphorsäure, Ameisensäure und Essigsäure umfaßt, ist.

5. Verfahren nach einem der Ansprüche 1, 2, 3 und 4, dadurch gekennzeichnet, daß die Bentonit-Konzentration des Vorgemisches im Bereich von etwa 500 bis 20 g/l, vorzugsweise von 400 bis 50 g/l, und die Bentonit-Konzentration des Schlammes nach Verdünnung mit Meerwasser im Bereich von ungefähr 200 bis 5 g/l, vorzugsweise von 100 bis 10 g/l, gewählt werden.

6. Verfahren nach einem der Ansprüche 1, 2, 3, 4 und 5, dadurch gekennzeichnet, daß die wirksame Menge an aktiver Verbindung derart ist, daß der Anteil der nach Verdünnung im Bohrschlamm vorliegenden aktiven Verbindung im Bereich von etwa 0,05 bis 10 Gew.-%, vorzugsweise von 0,1 bis 2 Gew.-% liegt, wobei diese Verbindung, nicht in Salzform, entweder in das Ausgangs-Süßwasser oder in das Vorgemisch, oder in Salzform entweder in das Verdünnungs-Meerwasser für das Vorgemisch oder in das mit Meerwasser verdünnte Gemisch eingeführt wird, wobei im Falle der Einführung in das Ausgangs-Süßwasser oder in das Vorgemisch die in diesem Stadium vorliegenden Anteile der aktiven Verbindung in Abhängigkeit von der späteren Verdünnung festgelegt werden.